# DEMANDE DE BREVET EUROPEEN

(11) **EP 3 822 712 A1**
(43) Date de publication de la demande: **19.05.2021**
(21) Numéro de dépôt: 19208971.2
(22) Date de dépôt: 13.11.2019
(51) Int. Cl.: G04B 19/12, G04B 37/22, G04D 3/00

(54) **COMPOSANT POUR PIÈCE D'HORLOGIE**

(71) Demandeur: ROLEX SA, 1211 Genève 26 (CH)
(72) Inventeur: JALANTI, Tuomas, 1211 Genève 26 (CH); MEIDANI, Hossein, 1211 Genève 26 (CH)
(74) Mandataire: Moinas & Savoye SARL

(57) **Abrégé**

Procédé de traitement de surface pour fabriquer un composant horloger à base de métal et/ou cermet, à partir d'un composant comprenant des irrégularités, comme des pores et/ou des précipités et/ou des stries, obtenu par une méthode de métallurgie des poudres ou de fabrication additive, caractérisé en ce qu'il comprend une étape d'amélioration de l'état de surface du composant par fusion superficielle sur une zone de surface du composant.

## Description

### Introduction

La présente invention concerne un composant horloger pour pièce d'horlogerie ainsi qu'un procédé de fabrication d'un tel composant. Elle concerne aussi un procédé de traitement de surface en tant que tel utilisé dans ce procédé de fabrication d'un tel composant. Elle concerne aussi une pièce d'horlogerie en tant que telle comprenant un tel composant horloger.

### Etat de l'Art

Dans le domaine de l'horlogerie, la fabrication d'un composant, notamment pour une fonction d'habillage, nécessite de respecter de nombreuses contraintes. D'abord, le composant doit respecter des contraintes mécaniques particulières, du fait de sa fonctionnalité attendue. En complément, il doit atteindre un aspect esthétique irréprochable. Enfin, il est souvent souhaité de proposer un composant horloger de forme particulière, souvent complexe, pour atteindre un nouveau résultat esthétique d'ensemble et/ou pour répondre à une fonctionnalité particulière de manière efficace. De plus, il est toujours préférable de proposer une solution qui permette de fabriquer un tel composant horloger de manière compatible avec une production et une commercialisation à grande échelle, y compris dans des compositions d'alliage difficile à obtenir par les techniques de fonderie conventionnelles. Enfin, il est aussi souvent avantageux d'obtenir des composants plus légers, notamment pour les métaux précieux dont la densité est élevée.

Les solutions existantes tentent finalement d'atteindre un compromis entre toutes les exigences précédentes. Elles reposent en général sur l'utilisation des matériaux métalliques ou d'alliages métalliques, notamment à base de métal noble, en mettant en oeuvre une métallurgie traditionnelle, ou sur l'utilisation de céramiques. Il existe toutefois un besoin d'améliorer les solutions existantes pour répondre toujours mieux aux différentes exigences susmentionnées.

Ainsi, le but général de la présente invention est de proposer une solution de fabrication d'un composant horloger qui atteint un compromis amélioré entre toutes les exigences susmentionnées.

Plus précisément, un premier objet de la présente invention est de proposer une solution flexible de fabrication d'un composant horloger qui permet de former des formes complexes tout en restant compatible avec l'utilisation d'un maximum de matériaux différents.

Un second objet de la présente invention est de proposer une solution de fabrication d'un composant horloger d'aspect esthétique irréprochable.

Un troisième objet de la présente invention est de proposer une solution de fabrication d'un composant horloger compatible avec une production à grande échelle.

Un quatrième objet de la présente invention est de proposer une solution de fabrication d'un composant horloger léger.

### Brève description de l'invention

A cet effet, l'invention repose sur un procédé de traitement de surface pour fabriquer un composant horloger à base de métal et/ou cermet, à partir d'un composant comprenant des irrégularités, comme des pores et/ou des précipités et/ou des stries, obtenu par une méthode de métallurgie des poudres ou de fabrication additive, caractérisé en ce qu'il comprend une étape d'amélioration de l'état de surface du composant par fusion superficielle sur une zone de surface du composant. Il comprend ensuite une étape de terminaison de la surface de ladite zone de surface du composant, cette étape de terminaison étant réalisée après l'étape d'amélioration de l'état de surface du composant par fusion superficielle.

L'invention porte aussi sur un composant horloger pour pièce d'horlogerie, à base de métal, cermet, comprenant un cœur comprenant des irrégularités, comme des pores et/ou des précipités, caractérisé en ce qu'il comprend une zone de surface présentant moins d'irrégularités que ledit cœur du fait d'un traitement de surface impliquant une fusion superficielle. Ladite zone de surface peut comprendre un taux de porosité inférieur à celui dudit cœur. L'invention porte aussi sur une pièce d'horlogerie, notamment une montre bracelet.

L'invention est plus précisément définie par les revendications.

### Brève description des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement la mise en oeuvre d'une étape d'amélioration d'une surface d'un composant par la méthode LSM selon un mode de réalisation de l'invention.
Les figures 2 et 3 illustrent quelques exemples d'absorptivité et de réflectivité de matériaux en fonction de certaines longueurs d'onde.
La figure 4 représente la réflectivité de trois échantillons d'or gris ayant subi des traitements de surface différents.
La figure 5 illustre schématiquement la mise en oeuvre de l'étape d'amélioration de l'état de surface par un procédé LSM selon une variante du mode de réalisation de l'invention.
La figure 6 illustre l'invention mise en oeuvre à titre d'exemple sur une carrure en or gris.
La figure 7 illustre l'invention mise en oeuvre à titre d'exemple sur une plaque à base d'acier 316L.
La figure 8 illustre l'invention par une vue agrandie dans l'épaisseur de la plaque à base d'acier 316L de la figure 7.
La figure 9 représente un exemple de mise en oeuvre de l'invention sur une plaque à base de titane grade 5.
La figure 10a représente une zone de surface de la plaque à base de titane grade 5 de la figure 9 traitée selon un mode de réalisation de l'invention.
La figure 10b représente une zone de surface d'une plaque à base de titane grade 5 similaire à celle de la figure 10a mais non traitée selon le mode de réalisation de l'invention.

L'invention repose sur le premier choix consistant à utiliser comme première étape d'un procédé de fabrication d'un composant horloger une technique de métallurgie des poudres ou de fabrication additive. Un tel choix présente le premier avantage de permettre la formation de formes complexes et variées, y compris des formes par exemple non atteignables par un procédé de métallurgie traditionnelle. D'autre part, ce premier choix présente aussi le deuxième avantage de permettre l'utilisation d'une multitude de matériaux, et même des alliages ou combinaisons d'éléments impossibles à obtenir par un autre procédé traditionnel, par exemple certains alliages métalliques incompatibles avec la métallurgie traditionnelle. Ce premier choix selon l'invention permet donc de répondre partiellement aux objets de l'invention.

Toutefois, ces techniques choisies présentent la spécificité de former des composants poreux et souvent hétérogènes, comprenant des défauts visibles en surface, comme des irrégularités visibles ou perceptibles, telles que des pores et/ou des précipités et/ou des stries. Ces techniques choisies sont ainsi en tant que telles difficilement compatibles avec les exigences horlogères. Il est de plus apparu que ces défauts sont très difficiles, voire impossibles, à éliminer sur des composants de forme complexe par des techniques de terminaison classiques, comme par exemple la rectification, le polissage, le polissage électrochimique, etc. L'invention comprend ainsi un traitement de surface qui met en œuvre une étape d'amélioration des composants obtenus par lesdites techniques de métallurgie des poudres ou de fabrication additive, pour finalement définir un procédé de fabrication amélioré compatible avec toutes les exigences horlogères.

Le procédé de fabrication d'un composant horloger selon un mode de réalisation de l'invention va maintenant être détaillé.

Selon le mode de réalisation de l'invention, dans une première étape, une ébauche du composant est préparée, selon un procédé connu de fabrication additive ou de métallurgie des poudres. Cette ébauche se présente sous une forme très proche de la forme finale du composant final. Elle peut toutefois subir, optionnellement, des opérations complémentaires telles que la réalisation de filetages et/ou la reprise d'usinage, avant ou après l'étape d'amélioration de surface telle qu'elle sera détaillée par la suite. Ainsi, nous désignerons abusivement par composant tout composant ou toute ébauche, retravaillée ou non, qui va subir le traitement d'amélioration de surface tel qu'il sera décrit par la suite. Ce composant peut être fabriqué par exemple en métal, comme un acier inoxydable, un alliage d'aluminium, de titane, d'or, ou d'argent, etc. En variante, il peut être fabriqué en cermet. Le composant peut se présenter intégralement dans le même matériau, parmi ceux envisagés ci-dessus. En variante, il peut comprendre une combinaison de matériaux différents. Nous entendrons par composant à base d'un certain matériau, un composant comprenant au moins 50% en poids dudit matériau, voire au moins 80% en poids dudit matériau.

En métallurgie des poudres, des poudres peuvent par exemple être obtenues par atomisation, broyage, ou une combinaison de ces techniques. Elles peuvent ensuite être compactées par exemple avec une presse à froid, une presse à chaud, une presse isostatique et/ou un frittage. Des méthodes connues de métallurgie des poudres sont par exemple la méthode connue par son sigle MIM, pour sa dénomination anglaise de « Metal Injection Molding », et la méthode connue par son sigle SPS, pour sa dénomination anglaise de « Spark Plasma Sintering ».

Des exemples de techniques connues de fabrication additive sont par exemple la méthode connue par son sigle SLM, pour sa dénomination anglaise de « Selective Laser Melting », la méthode connue par son sigle DMLS, pour sa dénomination anglaise de « Direct Metal Laser Sintering », la méthode connue par son sigle EBM, pour sa dénomination anglaise de «Electron Beam Melting », la méthode connue par son sigle NPJ, pour sa dénomination anglaise de « Nano particle jetting », la méthode connue par sa dénomination anglaise de « Metal Binder Jetting », la méthode connue par son sigle LENS, pour sa dénomination anglaise de « Laser Engineered Net Shaping », et la méthode connue par son sigle EBAM, pour sa dénomination anglaise de «Electron Beam Additive Manufacture ».

La métallurgie des poudres et les technologies additives appliquées aux métaux ou aux cermets permettent d'obtenir des composants de géométries variées, comme mentionné précédemment. Elles offrent aussi l'avantage de permettre l'utilisation de compositions d'alliages ou de combinaisons d'éléments, voire de combinaisons de matériaux différents au sein d'un même composant, qu'il n'est pas possible de synthétiser par les techniques conventionnelles. Par exemple, elles permettent d'utiliser un alliage d'or gris comprenant en poids au moins 75% de l'élément Au, entre 13% et 17% de l'élément Cr, entre 5% et 10% de l'élément Pd et entre 1% et 5% de l'élément Fe, de telle sorte que le paramètre colorimétrique b* de cet alliage selon le modèle CIE 1976 L*a*b* soit inférieur à 10.

Elles permettent également d'utiliser une composition comprenant en poids entre 90% et 98% de WC et entre 2% et 10% de nickel ou en or 18ct avec 2 à 25% de TiN. Elles permettent également de réaliser un composant constitué d'un cœur en alliage d'aluminium et d'une couche externe en acier inoxydable 316L ou des couches externes dont la composition varie selon l'emplacement sur la surface, par exemple, pour une carrure, les cornes, la bande de carrure, la bague de lunette, etc. peuvent être dans des alliages et/ou cermets différents. Ce qui donne la possibilité, par exemple, d'obtenir des gradients de couleur ou une juxtaposition de couleurs ou de résistance mécanique différentes.

Cependant les composants obtenus par ces technologies présentent tous une densité inférieure à la densité d'un composant massif dans le même matériau, parce qu'ils sont poreux. De ce fait, ils n'ont en général pas un état de surface satisfaisant pour permettre leur utilisation dans le domaine de l'horlogerie. En effet, il résulte de la nature même de ces technologies que des irrégularités sont visibles, ou au moins sont perceptibles, en surface des composants, sous la forme par exemple de pores, de bosses, de creux, de précipités, et/ou de stries, etc. La fraction de porosités, et donc la quantité de défauts, dépend du matériau utilisé et de la technologie de fabrication. Cependant, aucune des technologies actuelles ne permet la production de composants totalement exempts de défauts.

Or ces défauts affectent négativement l'aspect du composant, en particulier pour les surfaces que l'on souhaiterait lisses, par exemple terminées par un poli miroir. De plus, les pores, les précipités et/ou les stries de dimension dans au moins une direction supérieure ou égale à 1 µm (voire 0.5 µm) sont particulièrement gênants car les procédés de finition de surface, comme le grenaillage, le polissage mécanique et/ou le polissage chimique ou électrochimique ne les suppriment pas. En effet, les pores et précipités, qui ont un diamètre pouvant aller jusqu'à 500 µm, seront révélés sur une surface polie, provoquant queues de comètes, piqûres et autres défauts esthétiques. Plus généralement, pour le poli miroir, les irrégularités comme des pores et/ou des précipités et/ou des stries dont la dimension est supérieure ou égale à 0.5 µm, sont déjà susceptibles d'être perçues. Il résulte que les composants obtenus par les techniques mentionnées ci-dessus restent insatisfaisants en l'état pour former des composants horlogers, malgré leurs avantages, et que les procédés traditionnels de terminaison ne conviennent pas pour supprimer tous leurs défauts avec fiabilité.

L'invention se propose donc de supprimer les défauts susmentionnés résultant de la fabrication des composants selon la première étape explicitée ci-dessus, et met en oeuvre un procédé de traitement de surface, comprenant une étape d'amélioration de l'état de surface du composant, qui va être détaillée ci-après.

Selon un mode de réalisation, l'étape d'amélioration de l'état de surface du composant met en oeuvre une fusion superficielle, notamment par laser, par exemple par une méthode dénommée par son sigle LSM pour sa dénomination anglaise de « Laser Surface Melting ». Alternativement, un apport d'énergie peut être apporté au composant par un faisceau laser, par un faisceau plasma, ou par un faisceau électronique ou ionique, ou par un arc. Par exemple, une surface en matériau Ti-6Al-4V est traitée sous atmosphère d'hélium à 10⁻¹ Pa avec un faisceau électronique à 60 kV avec un courant de 1 à 50 mA, un spot de 10 à 100 µm, et une vitesse de passage de 0.1 à 1 m/s.

L'étape d'amélioration de l'état de surface du composant par fusion superficielle peut comprendre l'utilisation d'un laser dont une section à l'extrémité du faisceau laser présente sensiblement une répartition homogène d'énergie. Alternativement, elle comprend l'utilisation d'un faisceau plasma ou d'un faisceau électronique ou d'un faisceau ionique ou d'un arc.

Ces traitements ont pour point commun d'induire une fusion superficielle du composant, par un apport d'énergie, ce qui permet de supprimer les pores et/ou les précipités et/ou les stries en surface du composant, tout en ayant peu d'impact sur la densité globale de la pièce. Il s'agit en effet de traitements qui agissent uniquement sur une zone de surface du composant. Avantageusement, ces traitements peuvent également permettre de diminuer simultanément la rugosité de la pièce.

Plus précisément, un traitement au laser par la méthode LSM est basé sur l'interaction d'un rayonnement électromagnétique avec le matériau du composant. En fonction de la densité d'énergie, c'est-à-dire l'énergie par unité de surface, du faisceau laser, de sa focalisation/défocalisation sur ou à proximité de la surface du composant et de la durée de l'interaction, une partie de l'énergie est absorbée par une zone de surface du composant. Le matériau du composant dans cette zone de surface est ainsi chauffé jusqu'à fusion du matériau.

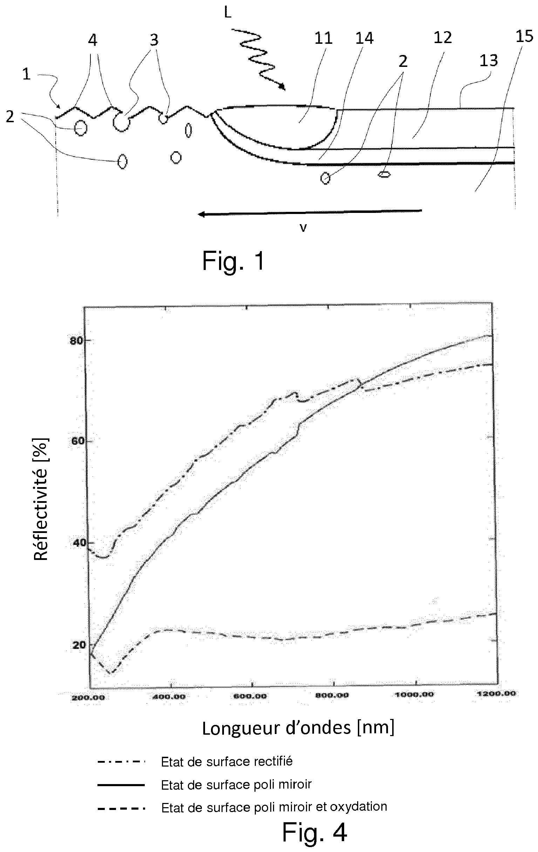

La figure 1 est une illustration schématique du traitement d'une surface d'un composant par la méthode LSM. Un composant 1 a été formé comme explicité précédemment, et comprend des pores 2 formant des défauts de surface 3, ainsi que des stries 4 en surface. Un laser L se déplace sur la surface à une certaine vitesse v (de droite à gauche sur la figure 1), et fait fondre le matériau du composant sur une zone de surface, formant un bain 11 liquide. La méthode met donc bien en oeuvre une fusion superficielle d'une zone de surface du composant 1. Les pores et/ou les précipités sont éliminés dans ce bain 11. Il en résulte une zone de surface 12 traitée de plus grande densité et de meilleure qualité, dont la surface 13 ne présente plus ou beaucoup moins de défauts. Le traitement a peu d'impact sur le cœur 15 du composant, qui conserve donc les pores 2 initiaux, après le passage du laser. Enfin, dans une zone intermédiaire 14, entre la zone de surface 12 et le cœur 15, le matériau n'est pas fondu mais sa structure est modifiée par la diffusion de la température durant le refroidissement et la solidification du bain 11.

L'épaisseur du bain 11, correspondant sensiblement à celle de la zone de surface 12, est comprise entre 10 µm et 1 mm. De préférence, cette épaisseur est supérieure ou égale à 50 µm, voire supérieure ou égale à 100 µm. De préférence encore, elle est inférieure ou égale à 1000 µm, voire inférieure ou égale à 500 µm, voire inférieure ou égale à 200 µm, voire inférieure ou égale à 100 µm.

Dans cette méthode LSM, la vitesse v de déplacement du laser est optimisée pour obtenir un bain 11 aux dimensions prédéterminées et assurer une solidification maitrisée du matériau. La zone de surface 12 du composant est ainsi densifiée par ce traitement par fusion superficielle. La couche intermédiaire 14 est une zone potentiellement impactée par le traitement de fusion superficielle : il peut y avoir une modification de la microstructure du matériau, même si ce dernier n'a pas intégralement fondu.

L'énergie et la longueur d'onde du laser sont de préférence adaptées à la nature du composant à traiter, en particulier à l'absorptivité et à la conductivité de son matériau constitutif, et à la géométrie de l'objet à traiter. Si l'énergie du laser est insuffisante, la température locale ne sera pas suffisante pour obtenir un bain liquide adapté et tous les défauts perceptibles ne seront pas éliminés. Si la taille du bain liquide et/ou la durée en phase liquide avant solidification sont insuffisants, les pores ne peuvent pas remonter correctement à la surface, et/ou l'épaisseur de la couche exempte de pores perceptibles n'est pas satisfaisante. Par ailleurs, si l'énergie absorbée est trop importante, la géométrie du composant traité peut être modifiée, entrainant des déformations éventuellement importantes et/ou la génération de pores supplémentaires à l'interface du bain liquide avec le matériau (keyhole), qui sont susceptibles d'être révélés lors de polissages ultérieurs. De plus, une fois le matériau devenu liquide l'absorptivité augmente fortement ce qui peut également être à l'origine de « keyholing » si l'énergie du faisceau est trop importante.

Ainsi, en maitrisant les gradients de température du bain liquide et sa vitesse de refroidissement par la répartition de puissance et/ou la vitesse de balayage et/ou du tramage, du laser, il est possible d'obtenir le résultat recherché, et d'éliminer les pores et éventuellement certaines inclusions de la couche refondue dans la zone de surface 12 traitée.

Selon le mode de réalisation, la vitesse de balayage est choisie inférieure à celle habituellement utilisée par la méthode LSM, par exemple au moins 10 fois plus lente que celle habituellement utilisée, qui est comprise entre 500 et 2000 mm/s, ce qui permet aux pores de migrer vers la surface. Finalement, la puissance, la distribution spatio-temporelle de puissance, la vitesse de passage du laser et le tramage en fonction du matériau et de la longueur d'onde du laser peuvent être optimisés pour définir la géométrie du bain liquide, et par conséquent l'épaisseur de la zone de surface traitée, avec un impact minimal sur la géométrie du composant.

A titre d'exemple, un laser de type IPG® de puissance 2kW, avec des optiques Trumpf® et un spot carré de 3x3 avec un Nozzle ILT est utilisé. L'utilisation d'autres équipements similaires, notamment les lasers rouges ou infrarouges, est également possible, par exemple les lasers CO2. Alternativement, les lasers bleu, vert, UV, etc., peuvent également être utilisés.

La focalisation et l'homogénéisation du faisceau sont avantageusement réglés selon une distribution spatiale de puissance de type « top-hat » qui est particulièrement avantageuse. Un faisceau de type « top-hat » est un faisceau dont l'extrémité de la section présente la particularité suivante : tout point de ladite section a la même énergie. Autrement dit, une section à l'extrémité du faisceau laser présente sensiblement une répartition homogène d'énergie. De plus, la vitesse et le tramage du laser sont paramétrés en fonction de l'énergie nécessaire à fournir pour obtenir un bain liquide aux dimensions voulues et pour maitriser la vitesse de refroidissement du bain liquide. Enfin, la puissance du laser est choisie pour permettre l'obtention d'un bain liquide dont la profondeur est égale ou légèrement supérieure à l'épaisseur de la couche formée par la zone de surface 12 densifiée voulue. Cette optimisation du procédé, notamment l'optimisation du point de départ, du motif de balayage, de la vitesse de balayage, du nombre de passes, etc., du laser permet de supprimer les défauts présents dans la matière et de limiter, voire d'éviter totalement que le laser génère de nouveaux défauts, par exemple des déformations, des distorsions, des éclaboussures, etc.

Avantageusement, cette optimisation tient compte de la matière et de la forme du composant à traiter. Avantageusement encore, les paramètres du laser sont de plus adaptés à la géométrie et/ou à l'état de surface et/ou à la composition du composant. La vitesse et/ou la puissance et/ou le nombre de passes et/ou le tramage peuvent être modulés pour tenir compte de la géométrie ou de la composition spécifique du composant. Alternativement, on peut sélectionner un laser avec une longueur d'onde adaptée à la réflectivité spécifique du matériau à traiter, par exemple pour l'or ou l'argent un laser de longueur d'onde inférieure ou égale à 500nm, respectivement 350nm.

Avantageusement, le composant peut être tempéré ou refroidi, soit en surface, soit globalement, par exemple par l'intermédiaire d'un support à contrôle de température, afin de maitriser la direction de solidification. Avantageusement, les conditions sont sélectionnées pour favoriser une orientation des grains sensiblement perpendiculaire à la surface extérieure du composant traité.

Dans une variante, le composant est refroidi par l'utilisation d'un fluide ou gaz pendant ou après le passage du laser ou pendant tout le processus, par exemple un flux d'un fluide adapté à une température prédéterminée. Le refroidissement peut être effectué directement après le traitement par laser ou de manière différée.
Le tableau ci-dessous donne quelques exemples de paramètres pour un laser IPG tel que détaillé précédemment pour mettre en oeuvre le traitement de surface, avec injection d'un gaz de protection.

| | Pₗₐₛₑᵣ [W] | V [mm/min] | gaz | Focus [mm] |
|---|---|---|---|---|
| Acier 316L | 1500 W | 1000 | Ar ou N₂ | 0 |
| Or gris | 1500 W | 500 | Ar | 0 |
| titane grade 5 | 1500 W | 1000 | Ar | 0 |

Dans une autre variante, les paramètres du laser sont asservis à une mesure de la température de la surface traitée du composant, par exemple à l'aide de capteurs de pyrométrie optique, ou de tout autre capteur adapté.

Finalement, le procédé de traitement de surface comprend avantageusement une étape de refroidissement contrôlé du composant comprenant :
- l'utilisation d'un fluide ou gaz, ou
- la régulation de la température du composant entier, notamment par l'intermédiaire d'un support à contrôle de température, ou
- l'asservissement à une mesure de la température de la surface traitée du composant.

Comme cela a été vu précédemment, l'interaction d'un laser avec la matière est un phénomène complexe. L'interaction du rayonnement laser avec le composant à travailler est influencée non seulement par la nature du laser et par les paramètres du procédé laser, comme cela a été vu, mais aussi par les caractéristiques du matériau constitutif du composant, notamment parmi sa réflexivité, sa conductivité et son absorptivité. Cette absorptivité du matériau à la longueur d'onde du laser est un des paramètres les plus importants. Plus l'absorptivité est basse, moins l'énergie du laser est « absorbée », rendant la fusion du matériau plus difficile.

L'invention fait le constat que l'absorptivité de la matière à traiter a un impact direct sur la dimension du bain de liquide et sur l'énergie nécessaire à apporter.

Or, on constate dans certains cas que l'absorptivité du matériau n'est pas adéquate pour la mise en œuvre optimale de la fusion superficielle.

Par exemple, lorsque le composant est préparé en un métal ou un alliage typique de l'horlogerie, par exemple un métal à base d'or, de cuivre, d'argent, de platine, de palladium, ou à base d'aluminium, dont l'absorptivité est faible, des difficultés peuvent être rencontrées. En effet, l'absorptivité de ces matériaux aux longueurs d'onde supérieures à 700 nm est telle qu'elle ne permet en général pas une interaction optimale par exemple avec un laser d'une longueur d'onde de 1064nm.

En remarque, comme mentionné ci-dessus, l'augmentation de la puissance du laser ou de la durée de l'interaction pour compenser une faible absorptivité d'un matériau risquerait d'entraîner des déformations géométriques de la surface, par exemple des déformations du composant dues à son échauffement global. Cet effet n'est pas acceptable pour former un composant horloger, et il n'est donc pas toujours possible d'augmenter la puissance du laser, ni de modifier un autre paramètre du laser.

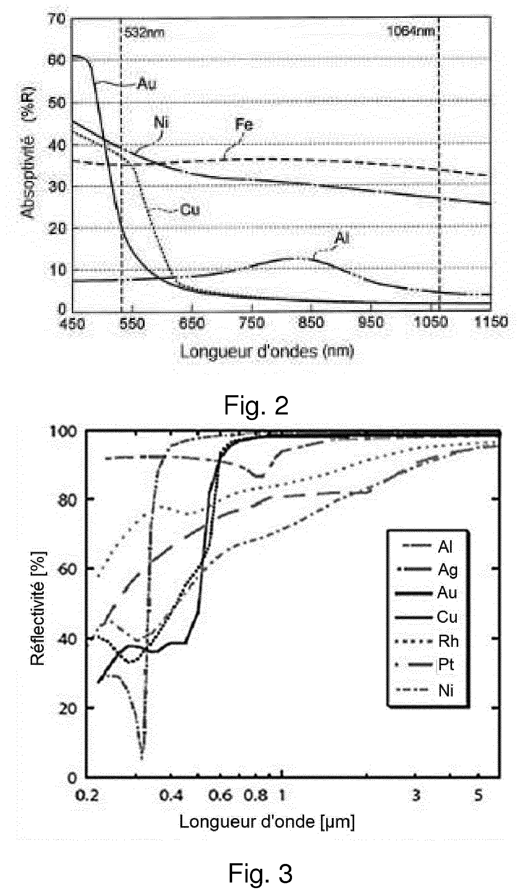

Les graphiques des figures 2 et 3 regroupent quelques exemples d'absorptivité et de réflectivité de matériaux en fonction de certaines longueurs d'onde.

Ces figures illustrent par exemple que pour un laser YAG de longueur d'onde 1064 nm, l'absorption moyenne du cuivre (Cu) est de 10% et celle du nickel (Ni) de 28%. Pour un laser à CO2 de longueur d'onde de ≈10 µm, l'absorption moyenne du cuivre est de 1% et celle du nickel de 4%.

Selon l'invention, il est pris en compte que l'absorptivité d'une longueur d'onde donnée par un matériau est un phénomène d'extrême surface, qui concerne essentiellement les premières couches atomiques et dépend de la nature de ces dernières et/ou de l'état de surface du matériau. Par conséquent, des variations dans l'état de surface, par exemple la présence d'une certaine rugosité et/ou de porosité, ou des variations de la composition de la surface du composant peuvent impacter le processus.

Il résulte des constatations précédentes que lorsque l'absorptivité du matériau est faible, et que l'énergie apportée risque de ne pas permettre une fusion suffisante du matériau, ce qui se manifeste par exemple par une fusion incomplète du matériau ou une dimension du bain liquide insuffisante, des pores et/ou des précipités et/ou des stries perceptibles en surface du composant risquent d'être insuffisamment éliminés.

Par exemple, pour un alliage en or gris (75.2 w% Au, 13.9 w% Pd, 3 w% Ag et 7.9 w% Cu, dont la réflectance est d'environ 75 %) il a été observé que pour un traitement avec un faisceau laser de 1500W, de type IPG® de puissance 2kW, avec des optiques Trumpf® et un spot carré de 3x3 avec un Nozzle ILT, et une vitesse de passage de 500 mm/minute, la dimension du bain liquide est peu optimale.

Pour répondre à ces situations particulières, le mode de réalisation propose de mettre en oeuvre une étape préalable de modification de l'absorptivité de la zone de surface dudit composant. Cette étape préalable met en oeuvre une préparation de la surface du composant, afin de réduire la part de réflectivité au profit de l'absorption de l'énergie de la zone de surface du composant destinée à être traitée par la suite. Ainsi, cette préparation de surface a par exemple pour effet de modifier le comportement de cette surface vis-à-vis d'un faisceau laser lors d'un futur traitement LSM. Optionnellement, une cartographie de l'absorptivité de la surface peut être effectuée au préalable afin de pouvoir y corréler les paramètres du laser. Optionnellement, la préparation de surface est localisée au lieu de l'amorce du procédé de traitement de surface, pour exploiter ensuite la modification d'absorptivité du bain liquide par rapport à la surface solide.

Selon une première variante de réalisation, l'étape préalable de préparation de surface comprend une étape de dépôt d'éléments chimiques sous la forme d'un revêtement. Ce dépôt apporte avantageusement une quantité inférieure ou égale à 5% at d'éléments chimiques, par rapport à la composition globale de la zone de surface. Le revêtement de surface peut modifier la nature chimique et/ou la couleur de ladite surface. Alternativement ou simultanément, le revêtement de surface peut modifier la topologie de la surface. Le revêtement de surface peut être déposé par exemple, par PVD, CVD, ALD, électrodéposition, sol-gel ou SAM. L'épaisseur du revêtement de surface peut être supérieure ou égale à 0.1 nm, voire supérieure ou égale à 0.5 nm, voire supérieure ou égale à 1 nm, et inférieure ou égale à 10 µm, voire inférieure ou égale à 1 µm.

Le tableau ci-dessous illustre quelques exemples réalisés selon cette première variante (pour un laser YAG de longueur d'onde de 1064 nm).

| **Substrat** | **Revêtement de surface** | | **Epaisseur densifiée avec revêtement** |
|---|---|---|---|
| matière | matière | épaisseur | |
| 950Pd | Fe | 10 µm | 1000 µm |
| 950Pt | Ru | 5 µm | 500 µm |
| Au750Ag45Cu | Ni | 1 nm | 500 µm |
| AlSi10Mg | TiN | 0.5 nm | 200 µm |
| CuSn5 | Sn | 10 nm | 100 µm |

Le revêtement de surface peut être déposé par une méthode de dépôt physique en phase vapeur, connue par son sigle PVD pour la dénomination anglaise de « Physical Vapor Deposition », ou par une méthode de dépôt chimique en phase vapeur, connue par son sigle CVD pour la dénomination anglaise de « Chemical Vapor Deposition », ou par une méthode de dépôt de couche atomique, connue par son sigle ALD pour la dénomination anglaise de « Atomic Layer Deposition », ou par électrodéposition, ou par un procédé sol-gel, ou par monocouches auto-assemblées, méthode connue par son sigle SAM pour la dénomination anglaise de « Self-Assembled Monolayer ».

Cette préparation de surface peut modifier, temporairement ou définitivement, la couleur de la surface.

Avantageusement, l'épaisseur du revêtement déposé est supérieure ou égale à 0.1 nm, voire supérieure ou égale à 0.5 nm, voire supérieure ou égale à 1 nm. De plus, cette épaisseur est de préférence inférieure ou égale à 10 µm, voire inférieure ou égale à 1 µm.

Dans tous les cas, le revêtement va modifier l'absorptivité initiale du matériau du composant, et favoriser la future étape d'amélioration de l'état de surface. En remarque, l'effet de ce revêtement reste proportionnellement négligeable sur les propriétés du matériau du composant, et notamment la matière ajoutée ne modifie pas significativement la composition de la zone de surface traitée, et ne modifie pas le comportement mécanique du matériau.

Selon une deuxième variante de réalisation de l'étape préalable de préparation de surface, une attaque chimique ou électrolytique de la surface du composant peut être mise en œuvre. Par exemple, une attaque à l'eau régale sur un alliage d'or permet de diminuer la réflectivité de la surface. La couche modifiée par cette préparation a avantageusement une épaisseur comprise entre 0.1 nm et 10 µm, voire entre 0.5 nm et 1 µm.

Selon une troisième variante de réalisation de l'étape préalable de préparation de surface, une micro texturation de la surface, par exemple par sablage, par microbillage, par rectification, par traitement laser ou par toute autre technique appropriée, est mise en oeuvre pour diminuer la réflectivité de la surface.

Selon une quatrième variante de réalisation de l'étape préalable de préparation de surface, il est possible de modifier l'absorptivité initiale à l'état solide de la surface du matériau du composant en effectuant une oxydation, une nitruration, une boruration, une chloration, une fluoration, ou une sulfuration. Une telle préparation peut par exemple augmenter la rugosité de la surface ou en modifier la couleur. Avec cette quatrième variante, l'épaisseur de la couche modifiée est du même ordre de grandeur que celle du revêtement mentionné ci-dessus. De plus, l'apport en éléments chimiques reste aussi très faible. En effet, cet apport en éléments chimiques reste inférieur ou égal à 5%at de la composition globale de la couche superficielle, c'est-à-dire de la zone de surface à traiter.

A titre d'exemple, la surface d'un composant à base d'alliage d'or peut être oxydée. Par exemple, un composant en or gris (75.0 w% Au, 7.0 w% Pd, 15.0 w% Cr et 3.0 w% Fe) peut être préalablement oxydé en surface, par exemple en le chauffant 15 minutes à 700°C dans un four à air. Une couche oxydée d'environ 100 nm est obtenue.

Des essais ont été effectués à partir de trois échantillons d'or gris 18 carats, qui ont été polis selon les techniques usuelles, jusqu'au papier P320 (surface rectifiée) puis jusqu'au papier P4000 (poli miroir). Un des échantillons polis miroir est ensuite oxydé pendant 15 minutes à 700 °C sous air. La réflectivité des trois échantillons est ensuite mesurée à l'aide s'un spectrophotomètre UV Visible IR. Les résultats obtenus sont détaillés dans le tableau ci-dessous et sur la figure 4 :

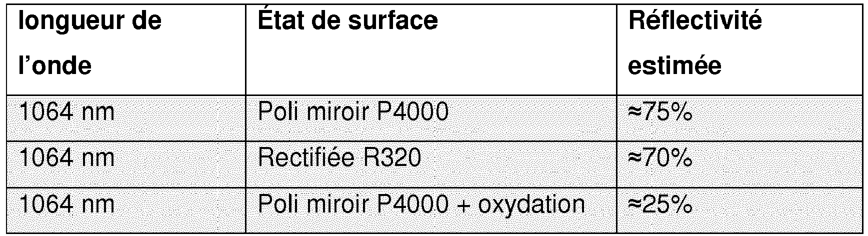

Ces essais illustrent que l'oxydation permet de diminuer la réflectivité du métal de 70 ou 75 % de réflectivité pour l'état non oxydé à moins de 30% de réflectivité en générant une épaisseur d'oxyde de 100 nm.

De plus, il ressort que sur la surface préalablement oxydée d'un objet en alliage en or gris (75.2 w% Au, 13.9 w% Pd, 3 w% Ag et 7.9 w% Cu), un laser de 1500W à 500 mm/min élimine les pores perceptibles sans porter atteinte à la géométrie de cet objet alors qu'un même traitement produit un effet insuffisant sur les pores présents sur la matière non oxydée. Avantageusement, le traitement est effectué en présence d'un gaz ou d'un mélange de gaz, par exemple un gaz ou un mélange de gaz réducteur (même faiblement réducteur), afin d'éliminer l'oxygène de la couche superficielle de l'alliage précieux. Ceci permet de ne pas modifier la composition finale du composant.

En variante finale, les différentes variantes de préparation susmentionnées peuvent être combinées entre elles.

Cette étape préalable de préparation de surface, bien qu'optionnelle, apporte dans tous les cas un effet très favorable pour l'étape ultérieure d'amélioration de l'état de surface du composant. En effet, l'augmentation de l'absorptivité favorise l'initialisation d'une fusion superficielle, à partir de l'état initial solide. De plus, il a été observé qu'en augmentant l'absorptivité initiale de la surface du matériau du composant, on obtient, pour un laser donné (par exemple un laser 1064 nm), un bain de fusion plus profond que pour une surface d'un même composant non préparée. L'étape de préparation augmente ainsi l'efficacité de l'étape d'amélioration de l'état de surface, et permet d'éliminer les défauts de surface sur une profondeur adaptée, sans apporter un excédent d'énergie qui pourrait impacter la géométrie du composant.

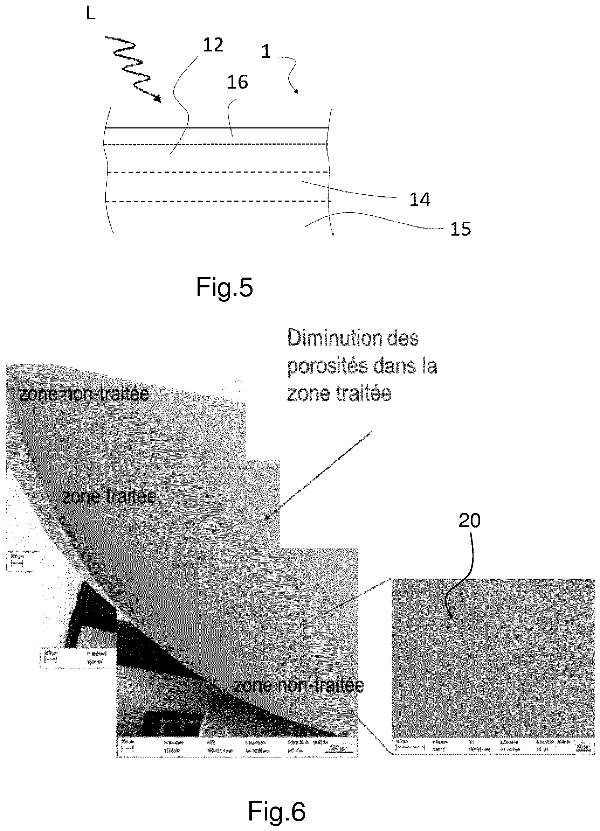

La figure 5 illustre schématiquement la mise en oeuvre de l'étape d'amélioration de l'état de surface par un procédé LSM après mise en oeuvre d'une étape de préparation de surface par dépôt d'un revêtement ou par oxydation. Le composant 1 comprend un revêtement ou une couche d'oxydation 16 en surface, qui recouvre une zone de surface 12 destinée à être traitée, qui recouvre une zone intermédiaire 14 entre ladite zone de surface 12 et le cœur 15 du composant. Lors du traitement par un laser L, le revêtement ou la couche d'oxydation 16 et la zone de surface 12 vont être fondus simultanément, de manière favorisée par le revêtement ou la couche d'oxydation 16, et la zone intermédiaire 14 sera impactée thermiquement mais non fondue. En remarque, après le traitement d'amélioration de surface, le revêtement ou la couche d'oxydation 16 auront disparu, fusionnant avec la zone de surface 12.

Une telle préparation de surface est particulièrement intéressante pour les composants à base d'or, de cuivre, d'argent, de platine, de palladium, d'aluminium ou à base de leurs alliages.

Naturellement, dans une variante de réalisation, l'étape préalable de préparation peut être appliquée sur une partie seulement de la surface du composant, notamment sur la zone d'amorce du procédé.

L'étape d'amélioration de la surface d'un composant, telle que décrite précédemment, apporte finalement les deux effets avantageux suivants :
- Elle rend la surface d'un composant poreux compatible avec la réalisation de procédés de terminaison traditionnels, qui permettent d'améliorer encore l'aspect de l'état de surface ;
- Elle permet de densifier la surface du composant en regard de son cœur, et d'offrir ainsi la possibilité d'alléger le composant par rapport à un composant obtenu à partir de matière massive.

De préférence, le procédé de traitement de surface selon le mode de réalisation de l'invention peut comprendre une étape ultérieure de terminaison. Cette étape est notamment particulièrement intéressante pour fabriquer des composants d'habillement horloger, pour lesquels les exigences sur l'état de surface sont très élevées.

Notamment, cette étape de terminaison comprend une étape de rectification, d'usinage ou de polissage de la surface de ladite zone de surface du composant. De préférence, cette étape de terminaison consiste en un polissage.

En remarque, une étape de polissage peut être nécessaire plusieurs fois, non seulement à la fabrication, mais aussi par la suite lors d'opérations d'entretien, pour éliminer les rayures. Ce polissage est de plus très exigeant si on souhaite obtenir au final un effet miroir, qui peut nécessiter l'élimination de matière sur une épaisseur pouvant aller jusqu'à environ 50 µm, voire plus, selon la profondeur des rayures. Il est donc nécessaire que la zone de surface traitée du composant présente une épaisseur suffisante pour autoriser une telle étape de terminaison. Cette épaisseur pourra donc être prédéfinie en fonction de l'état de surface final souhaité et de manière compatible avec les opérations d'entretien habituelles. Avantageusement, l'épaisseur de la zone de surface traitée pourra donc être supérieure ou égale à 100 µm, voire supérieure ou égale à 200 µm, voire supérieure ou égale à 500 µm, voire supérieure ou égale à 1000 µm.

Dans tous les cas, le procédé de traitement de surface tel que décrit précédemment pourra être utilisé pour traiter la surface entière d'un composant, ou pour traiter une partie seulement de cette surface.

L'invention a été décrite dans le cadre d'un procédé de fabrication d'un composant horloger, qui comprend une première étape de fabrication d'un composant à base de métal ou de cermet par une méthode de métallurgie des poudres ou de fabrication additive, avant de mettre en oeuvre un procédé de traitement de surface dudit composant obtenu par la première étape. L'invention porte aussi sur ce procédé de traitement de surface en tant que tel.

Le procédé de fabrication décrit précédemment permet donc d'obtenir des composants horlogers avantageux, comme cela a été décrit précédemment. De tels composants peuvent être particulièrement légers, peuvent prendre des formes complexes, et/ou être à base de combinaisons originales d'éléments ou de matériaux. Par exemple, le procédé de fabrication permet de diminuer le poids d'un composant horloger qui pourrait être également fabriqué par un procédé traditionnel existant, tout en conservant une couche dense en surface, de même aspect. Selon les alliages et/ou la géométrie du composant, un gain de poids significatif peut ainsi être obtenu, par exemple de 20%, voire de 30% ou même plus.

L'invention porte ainsi sur un composant horloger en tant que tel. Un tel composant horloger pour pièce d'horlogerie est à base de métal et/ou de cermet, comprend un cœur comprenant des irrégularités, comme des pores et/ou des précipités, du fait de sa fabrication par une méthode de métallurgie des poudres ou de fabrication additive, et comprend une zone de surface présentant moins d'irrégularités que ledit cœur du fait qu'elle a subi un traitement de surface impliquant une fusion superficielle.

Selon le mode de réalisation de l'invention, le cœur et la zone de surface du composant horloger présentent sensiblement la même composition chimique.

La zone de surface peut donc comprendre un taux de porosité inférieur à celui du cœur. La zone de surface peut aussi comprendre des précipités de densité et/ou de dimensions inférieures à celles des précipités du cœur.

Le cœur du composant horloger peut être poreux, de densité inférieure ou égale à 99,5% et la zone de surface peut présenter un taux de porosité strictement supérieur à celui dudit cœur et/ou une densité supérieure ou égale à 99,9%. La densité représente un pourcentage de la densité du même matériau massif.

La zone de surface peut comprendre un taux de porosité de taille supérieure à 0.5 µm inférieur ou égal à 0.1%.

La zone de surface peut s'étendre sur une profondeur supérieure ou égale à 20 µm, voire supérieure ou égale à 50 µm, voire supérieure ou égale à 100 µm. Cette profondeur correspond donc à l'épaisseur de la couche formée par la zone de surface. Elle s'entend comme la valeur minimale ou la valeur moyenne.

La zone de surface peut s'étendre sur une profondeur inférieure ou égale à 1000 µm, voire inférieure ou égale à 500 µm, voire inférieure ou égale à 200 µm, voire inférieure ou égale à 100 µm.

La zone de surface du composant peut s'étendre sur une partie seulement ou sur toute la surface du composant horloger.

Le composant horloger peut être à base d'acier inoxydable austénitique, ou à base d'alliage de titane, ou à base d'alliage de métaux précieux, ou à base d'alliages de cuivre.

Le composant horloger peut être à base de métaux à faible absorptivité, inférieure ou égale à 30%, et/ou à haute conductivité thermique, comme un métal parmi Au, Al, Cu, Pt, Pd et leurs alliages.

Le composant horloger peut être une carrure, un fond, une lunette, une couronne, une maille de bracelet de montre, un fermoir de bracelet de montre, une aiguille, ou une applique.

L'invention porte aussi sur une pièce d'horlogerie, notamment une montre, comme une montre bracelet, comprenant au moins un composant horloger tel que décrit ci-dessus.

Avantageusement, la porosité initiale du composant est sélectionnée pour obtenir un composant de densité prédéterminée. Le procédé selon l'invention permet de densifier uniquement la couche superficielle, c'est-à-dire la zone de surface susmentionnée, permettant l'obtention de composants plus légers, dont l'esthétique est améliorée. Par ailleurs, la couche superficielle étant dans le même matériau que le cœur poreux, il n'y a pas de problème d'interface que l'on serait susceptible de rencontrer avec des revêtements traditionnels comme un plaquage.

L'invention est illustrée ci-dessous par trois exemples qui permettent de fabriquer un composant horloger.

Selon le premier exemple, une carrure en or gris (75.2 w% Au, 13.9 w% Pd, 3 w% Ag et 7.9 w% Cu) est fabriquée en mettant d'abord en oeuvre un procédé SLM décrit précédemment. Avant tout traitement, la surface de la carrure issue du procédé SLM présente entre 0.5 et 2% de porosité constituée de pores de taille supérieure à 0.5 µm, et une absorptivité d'environ 20%. La carrure est ensuite oxydée pendant 15 minutes à 700 °C sous air, ce qui génère une couche oxydée d'environ 100 nm. Cette étape correspond à une étape de préparation du procédé de traitement selon l'invention décrit précédemment. Ensuite, un laser IPG 2kW avec des optiques Trumpf® et un spot carré de 3x3 avec un Nozzle ILT à une puissance 1500 W (top hat), est balayé sur la surface de la carrure, avec une vitesse de scan moyenne de 500 mm/min et sous flux d'argon. La distance entre le laser et la surface à traiter est ajustée pour que ladite surface soit au niveau du plan focal. Cette dernière étape correspond à l'étape d'amélioration de l'état de surface du composant par fusion superficielle sur une zone de surface du composant selon l'invention. On obtient une carrure sans pore et/ou précipité perceptible en surface. L'épaisseur de la couche densifiée est de 200 µm et présente moins de 0.1 % de porosité constituée de pores de taille supérieure à 0.5 µm.

La figure 6 illustre cet exemple, en comparant une zone non traitée de la carrure avec une zone traitée. L'agrandissement de la zone non traitée montre des défauts 20 qui ont disparu après mise en oeuvre du procédé de traitement de surface selon le mode de réalisation de l'invention.

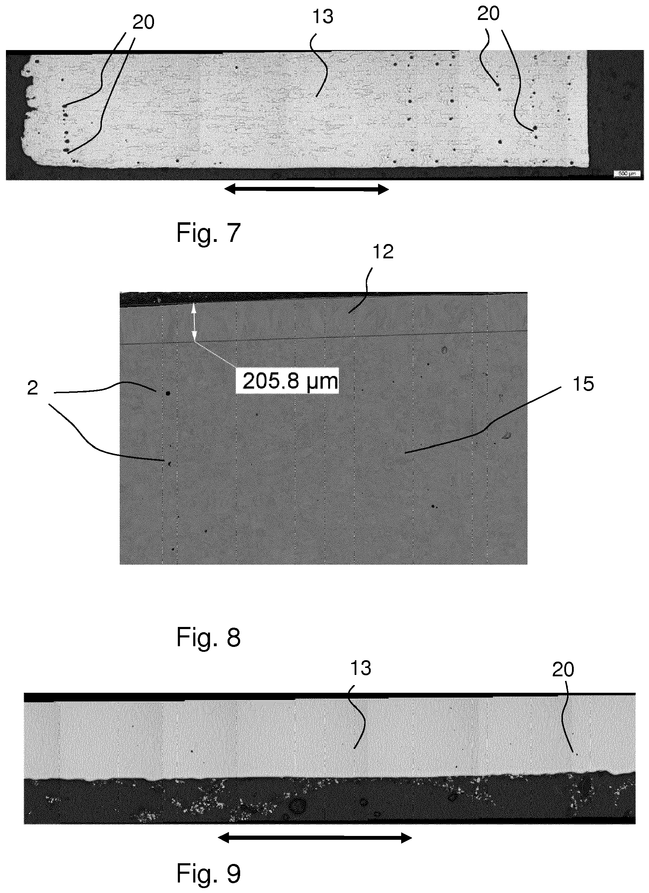

Dans le deuxième exemple, une plaque en acier 316L fabriquée par Selective Laser Melting (SLM) est traitée selon l'invention. Avant son traitement, la surface de la plaque en acier 316L présente entre 0.5 et 2% de porosité constituée de pores de taille supérieure à 0.5 µm. Un laser IPG 2kW avec des optique Trump® et un spot carré de 3x3 avec un Nozzle ILT à une puissance 1500 W (top hat), et balayé sur la surface de la plaque avec une vitesse de scan moyenne de 1000 mm/min et sous flux d'azote. La distance entre le laser et la surface à traiter est ajustée pour que ladite surface soit au niveau du plan focal. On obtient une plaque sans pore et/ou précipité perceptibles en surface. L'épaisseur de la couche densifiée est d'environ 200 µm et présente moins de 0.1 % de porosité constituée de pores de taille supérieure à 0.5 µm. Cet exemple est illustré par les figures 7 et 8.

La figure 7 illustre la surface de la plaque à base d'acier 316L. Cette surface comprend des zones non traitées avec plusieurs défauts 20 visibles. Elle comprend une zone 13 traitée par le procédé de traitement d'état de surface selon l'invention, qui ne comprend plus ces défauts 20. La figure 8 montre une vue agrandie dans l'épaisseur de la plaque à base d'acier 316L selon l'invention. Ce composant comprend une zone de surface 12 dense et sans défaut, et un cœur 15 moins dense comprenant des porosités 2.

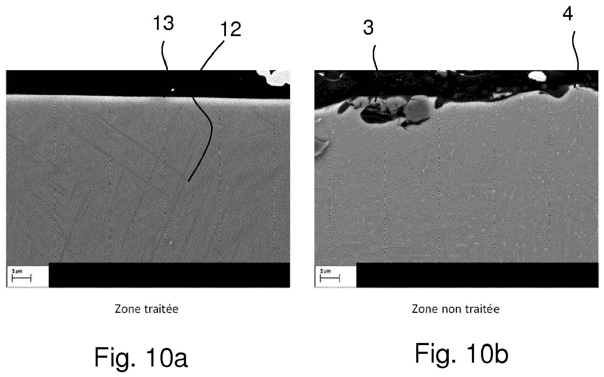

Dans le troisième exemple, une plaque en Titane Grade 5 fabriquée par Selective Laser Melting (SLM) est traitée selon l'invention. Avant traitement, la surface de la plaque en titane Grade 5 présente entre 0.2 et 1% de porosité constituée de pores de taille supérieure à 0.5 µm. Un laser IPG 2kW avec des optique Trumpf® et un spot carré de 3x3 avec un Nozzle ILT à une puissance 1500 W (top hat), est balayé sur la surface de la plaque avec une vitesse de scan moyenne de 1000 mm/min et sous flux d'argon. La distance entre le laser et la surface à traiter est ajustée pour que ladite surface soit au niveau du plan focal. On obtient une plaque sans pore et/ou précipité perceptibles en surface. L'épaisseur de la couche densifiée est de 300 µm et présente moins de 0.1 % de porosité constituée de pores de taille supérieure à 0.5 µm. Cet exemple est illustré par les figures 9 et 10.

La figure 9 illustre par exemple la surface de la plaque à base de titane grade 5. Cette surface comprend des zones non traitées avec plusieurs défauts 20 visibles. Elle comprend une zone 13 traitée par le procédé de traitement d'état de surface selon l'invention, qui ne comprend plus ces défauts 20. Les figures 10a et 10b montrent des vues agrandies de zones de surface de la plaque à base de titane grade 5 respectivement traitées selon l'invention et non traitées. La zone de surface 12 traitée selon l'invention, visible sur la figure 10a, est dénuée de défaut, tant au niveau de son épaisseur que sur sa surface 13. Au contraire, la zone non traitée, visible sur la figure 10b, comprend des défauts, comme des pores de surface 3 et des stries 4.

## Revendications

1. Procédé de traitement de surface pour fabriquer un composant horloger à base de métal et/ou cermet, à partir d'un composant comprenant des irrégularités, comme des pores et/ou des précipités et/ou des stries, obtenu par une méthode de métallurgie des poudres ou de fabrication additive, **caractérisé en ce qu'**il comprend une étape d'amélioration de l'état de surface du composant par fusion superficielle sur une zone de surface du composant et une étape de terminaison de la surface de ladite zone de surface du composant, cette étape de terminaison étant réalisée après l'étape d'amélioration de l'état de surface du composant par fusion superficielle.

2. Procédé de traitement de surface selon la revendication précédente, **caractérisé en ce que** ladite zone de surface du composant comprend une profondeur supérieure ou égale à 50 µm.

3. Procédé de traitement de surface selon l'une des revendications précédentes, **caractérisé en ce que** ladite zone de surface du composant comprend une profondeur moyenne inférieure ou égale à 1000 µm, voire inférieure ou égale à 500 µm, voire inférieure ou égale à 200 µm, voire inférieure ou égale à 100 µm.

4. Procédé de traitement de surface selon l'une des revendications précédentes, **caractérisé en ce qu'**il comprend une étape préalable de modification de l'absorptivité de ladite zone de surface dudit composant par une préparation de surface préalable afin de réduire la part de réflectivité au profit de l'absorption de l'énergie de ladite zone de surface.

5. Procédé de traitement de surface selon la revendication précédente, **caractérisé en ce que** l'étape préalable comprend une étape de dépôt d'éléments chimiques sous la forme d'un revêtement de surface, cette étape de dépôt apportant une quantité d'éléments chimiques inférieure ou égale à 5% at par rapport à la composition globale de ladite zone de surface.

6. Procédé de traitement de surface selon la revendication 4, **caractérisé en ce que** l'étape préalable comprend tout ou partie des sous-étapes suivantes :
- une attaque chimique ou électrolytique de la surface; ou
- une microtexturation de surface, notamment par sablage, par microbillage, par rectification, par traitement laser, pour diminuer la réflectivité de la surface de ladite zone de surface du composant.

7. Procédé de traitement de surface selon la revendication 4, **caractérisé en ce que** l'étape préalable comprend un traitement d'oxydation, de nitruration, de boruration, de chloration, de fluoration ou de sulfuration modifiant l'absorptivité de la surface de ladite zone de surface du composant.

8. Procédé de fabrication d'un composant horloger, **caractérisé en ce qu'**il comprend une première étape de fabrication d'un composant à base de métal et/ou cermet, par une méthode de métallurgie des poudres ou de fabrication additive, et **en ce qu'**il met en oeuvre un procédé de traitement de surface dudit composant obtenu par la première étape selon l'une des revendications précédentes.

9. Composant horloger (1) pour pièce d'horlogerie, à base de métal et/ou cermet, comprenant un cœur (15) comprenant des irrégularités, comme des pores et/ou des précipités, **caractérisé en ce qu'**il comprend une zone de surface (12) présentant moins d'irrégularités que ledit cœur (15) du fait d'un traitement de surface impliquant une fusion superficielle selon un procédé selon l'une des revendications 1 à 7.

10. Composant horloger pour pièce d'horlogerie selon la revendication précédente, **caractérisé en ce que** ledit cœur (15) et ladite zone de surface (12) du composant horloger se présentent sensiblement dans le même matériau.

11. Composant horloger pour pièce d'horlogerie selon la revendication 9 ou 10, **caractérisé en ce que** ladite zone de surface (12) comprend un taux de porosité inférieur à celui dudit cœur (15) et/ou **en ce que** ladite zone de surface (12) comprend des précipités de densité et/ou de dimension inférieures à celles des précipités dudit cœur (15) et/ou **caractérisé en ce que** ledit cœur (15) est poreux, de densité inférieure ou égale à 99,5% et **en ce que** ladite zone de surface (12) présente un taux de porosité strictement supérieur à celui dudit cœur et une densité supérieure ou égale à 99,9%.

12. Composant horloger pour pièce d'horlogerie selon l'une des revendications 7 à 11, **caractérisé en ce que** ladite zone de surface (12) comprend un taux de porosité de taille supérieure à 0.5 µm inférieur ou égal à 0.1%.

13. Composant horloger pour pièce d'horlogerie selon l'une des revendications 9 à 12, **caractérisé en ce que** ladite zone de surface (12) s'étend sur une profondeur supérieure ou égale à 50 µm.

14. Composant horloger pour pièce d'horlogerie selon l'une des revendications 9 à 13, **caractérisé en ce que** ladite zone de surface s'étend sur une profondeur moyenne inférieure ou égale à 1000 µm, voire inférieure ou égale à 500 µm, voire inférieure ou égale à 200 µm, voire inférieure ou égale à 100 µm.

15. Composant horloger pour pièce d'horlogerie selon l'une des revendications 9 à 14, **caractérisé en ce que** ladite zone de surface du composant s'étend sur une partie ou sur toute la surface du composant horloger.

16. Composant horloger pour pièce d'horlogerie selon l'une des revendications 9 à 15, **caractérisé en ce qu'**il est à base d'acier inoxydable austénitique, ou à base d'alliage de titane, ou à base d'alliage de métaux précieux, ou à base d'alliages de cuivre.

17. Composant horloger pour pièce d'horlogerie selon l'une des revendications 9 à 16, **caractérisé en ce qu'**il est à base de métaux à faible absorptivité, inférieure ou égale à 30%, et/ou à haute conductivité, comme un métal parmi Au, Al, Cu, Pt, Pd et leurs alliages.

18. Composant horloger pour pièce d'horlogerie selon l'une des revendications 9 à 17, **caractérisé en ce qu'**il est une carrure, un fond, une lunette, une couronne, une maille de bracelet de montre, un fermoir de bracelet de montre, une aiguille, ou une applique.

19. Pièce d'horlogerie, notamment montre, **caractérisée en ce qu'**elle comprend un composant horloger selon l'une des revendications 9 à 18.
